# EUROPÄISCHE PATENTSCHRIFT

(11) **EP 1 717 492 B1**
(45) Veröffentlichungstag und Bekanntmachung des Hinweises auf die Patenterteilung: **18.09.2013**
(21) Anmeldenummer: 05103457.7
(22) Anmeldetag: 27.04.2005
(51) Int. Cl.: F16H 63/32, F16H 59/70

(54) **Verfahren zum Anbringen eines Sensorbauteils an eine Schaltgabel**
Method for fixing a signal emitter to shifting yoke
Procédé pour fixer un emetteur de signal à fourchette de boîte de vitesses

(43) Veröffentlichungstag der Anmeldung: 02.11.2006
(73) Patentinhaber: Getrag Ford Transmissions GmbH, 50725 Köln (DE)
(72) Erfinder: Schwekutsch, Michael, 45711, Datteln (DE); Doelling, Matthias, 51429, Bergisch-Gladbach (DE)
(74) Vertreter: Albiger, Jonas

(56) Entgegenhaltungen:
- EP-A- 0 715 098
- EP-A- 1 486 285
- DE-A1- 10 337 646
- DE-A1- 19 924 995
- DE-B3- 10 336 971

## Beschreibung

Die Erfindung betrifft ein Verfahren zum Anbringen eines Sensorbauteils an eine Schaltgabel für ein Schaltgetriebe. Insbesondere kann das Sensorbauteil zur Positionsbestimmung der Schaltgabel in dem Schaltgetriebe dienen.

In automatisierten Schaltgetrieben, bei denen Schaltgabeln zum Ein- oder Auslegen eines Ganges durch Aktuatoren bewegt werden, ist es für die Ansteuerung der Aktuatoren notwendig, die augenblickliche Position der Schaltgabel in dem Schaltgetriebe genau zu erfassen. Dazu ist üblicherweise an der Schaltgabel das Sensorbauteil angebraucht, das mit einer an einem Gehäuse des Schaltgetriebes ortsfest angebrachten Sensoreinrichtung zusammenwirkt. Für die Auslegung der Sensorik und für die Messgenauigkeit ist von entscheidender Bedeutung, dass der Abstand und der Winkel zwischen Sensorbauteil und Sensoreinrichtung sich in einem sehr engen Toleranzfeld befinden.

Die Größe des Toleranzfeldes wird dabei von der Länge einer Toleranzkette bestimmt, die zwischen der am Gehäuse fest angebrachten Sensoreinrichtung und dem Sensorbauteil an der im Gehäuse bewegbar angeordneten Schaltgabel gegeben ist. Die Toleranzkette führt von der Sensoreinrichtung über das Gehäuse des Schaltgetriebes auf eine Lagerung der Schaltgabel. Die Toleranzkette innerhalb der Schaltgabel wird in der Regel gebildet durch die Lagerung der Schaltgabel, durch eine Schaltstange, die sich zwischen der Lagerung der Schaltgabel und einem Gabelgrundkörper der Schaltgabel erstreckt, durch Gleitschuhe, die an dem Gabelgrundkörper angebracht sind und mit einer Schaltmuffe zusammenwirken, die durch die Schaltgabel geführt wird, und durch einen Sensorarm, der das Sensorbauteil mit der Schaltgabel verbindet.

Es ist bekannt, das Sensorbauteil mit dem Sensorarm an die Schaltgabel anzuschweißen. Um nach dem Anschweißen die erforderliche Lagegenauigkeit des Sensorbauteils bezogen auf die Schaltgabel bzw. auf die Sensoreinrichtung in dem Schaltgetriebe zu erreichen, ist ein nachträgliches Richter des Sensorarmes bzw. des Sensorbauteils notwendig. Ein derartiges Verfahren zum Anbringen des Sensorbauteils an die Schaltgabel ist zeitaufwendig und führt nur bei entsprechend großem Aufwand zu befriedigenden Ergebnissen.

Aus der DE 103 37 646 A1 ist ein Verfahren zum Herstellen einer Schaltgabel bekannt, deren Einzelteile nach Anbringen eines magnetischen Körpers zur Positionserkennung an einem der Einzelteile durch Verschweißen miteinander verbunden werden. Nach erfolgtem Fügen und Verbinden der Einzelteile wird der magnetische Körper zum Permanentmagneten magnetisiert. Schließlich wird die Lage des Magneten gemessen. Befindet sich der Magnet nicht in seiner Soll-Position, so ist eine mechanische Nacharbeitung notwendig, die mit Aufwand und Kosten verbunden ist.

Aus der gattungsmäßigen DE 103 6 971 B3 ist eine Anordnung zur Erfassung der Lageposition einer Schaltgabel oder einer Schaltschwinge in einem Getriebegehäuse eines vorzugsweise automatisierten Schaltgetriebes eines Kraftfahrzeugs bekannt. Ein Sensor ist gehäusefest und ein Positionsgeber im Wesentlichen am Ende der Schaltgabel oder Schaltschwinge angeordnet.

Der Erfindung liegt daher die Aufgabe zugrunde, ein Verfahren zum Anbringen des Sensorbauteils an die Schaltgabel bereitzustellen, das vergleichsweise einfach durchführbar ist und einen verbesserten Toleranzausgleich ermöglicht.

Die der Erfindung zugrunde liegende Aufgabe wird durch ein Verfahren mit den Verfahrensschritten des Anspruchs 1 gelöst. Danach wird die Schaltgabel in eine Fixiervorrichtung eingelegt und dort ausgerichtet, wobei die Ausrichtung anhand wenigstens eines ausgewählten Bezugspunktes an der Schaltgabel erfolgt. Die Schaltgabel ist dabei vorzugsweise komplett aufgebaut und umfasst den Gabelgrundkörper, ein oder die Lager zur Lagerung der Schaltgabel sowie die Schaltstange, die die Lager mit dem Gabelgrundkörper verbindet. Auch sind Gleitschuhe an dem Gabelgrundkörper angebracht, die in eine Umfangsnut in der Schaltmuffe greifen. Der ausgewählte Bezugspunkt ist dabei erfindungsgemäß das wenigstens eine Lager der Schaltgabel und/oder die Gleitschuhe. Eine mit Spiel versehene, vorzugsweise als Steckverbindung ausgebildete Verbindung zwischen Halterung und Schaltgabel wird in der Fixiervorrichtung in eine spielfreie Verbindung umgewandelt.

In dem erfindungsgemäßen Verfahren kann der Gabelgrundkörper sowohl ein Gussteil aus Kunststoff, Bronze oder Aluminium als auch ein Blechumformteil sein. Die Gleitschuhe können an dem Gabelgrundkörper angespritzt sein oder auch durch ein Gleitschuhring miteinander verbunden sein, die in den Gabelgrundkörper eingeclipst werden kann.

Nachdem die Schaltgabel entsprechend in der Fixiervorrichtung ausgerichtet ist, wird eine Verbindung zwischen einer Halterung für das Sensorbauteil und der Schaltgabel hergestellt, wobei beim Herstellen der Verbindung die relative Lage der Halterung bezogen auf den wenigstens einen Bezugspunkt der Schaltgabel durch die Fixiervorrichtung vorgegeben wird. Dies bedeutet, dass die Halterung für das Sensorbauteil bezogen auf die Schaltgabel, vorzugsweise bezogen auf die Lager und Gleitschuhe der Schaltgabel genau positioniert ist und ein nachträgliches Richten der Halterung für das Sensorbauteil nicht mehr notwendig ist. Des Weiteren umfasst das erfindungsgemäße Verfahren den Verfahrensschritt des Verbindens der Halterung mit dem Sensorbauteil, so dass nun das Sensorbauteil über die Halterung mit der Schaltgabel verbunden ist. Somit stellt das Verfahren sicher, dass mit der Herstellung der Verbindung zwischen Halterung für das Sensorbauteil und der Schaltgabel die gewünschte räumliche Anordnung von Sensorbauteil bezogen auf die Lager und/oder die Gleitschuhe der Schaltgabel erreicht wird.

Vorzugsweise erfolgt das Verbinden der Halterung mit dem Sensorbauteil in der Fixiervorrichtung. Zu diesem Zweck kann das Sensorbauteil in die Fixiervorrichtung eingelegt werden, wobei die Fixiervorrichtung hier eine genaue Position des Sensorbauteils bezogen auf den wenigstens einen ausgewählten Bezugspunkt der Schaltgabel vorgibt. Das Verbinden der Halterung mit dem Sensorbauteil sowie das Verbinden der Halterung mit der Schaltgabel kann dabei in einem gemeinsamen Verfahrensschritt erfolgen.

Die Verbindung zwischen Halterung für das Sensorbauteil und der Schaltgabel kann durch eine aushärtbare Masse hergestellt werden, wobei die Masse in der Fixiervorrichtung zumindest teilweise aushärtet. Die ausgehärtete Masse sorgt dann für eine feste Verbindung zwischen der Halterung und der Schaltgabel, wobei bedingt durch die Fixiervorrichtung die Masse so aushärtet, dass die Halterung sich in der gewünschten Position bezogen auf den wenigstens einen ausgewählten Bezugspunkt an der Schaltgabel befindet. Die Masse härtet zweckmäßig soweit aus, dass auch nach Entnahme aus der Fixiervorrichtung die Halterung für das Sensorbauteil die gewünschte, auf die Schaltgabel bezogene Position beibehält.

Vorzugsweise ist die aushärtbare Masse eine Gussmasse, wobei die Halterung für das Sensorbauteil durch ein Gussverfahren in der Fixiervorrichtung hergestellt werden kann. Somit stellt die Halterung ein Gussteil dar, das an die Schaltgabel angegossen wird. Als Gussmasse können beispielsweise Kunststoff, Bronze oder Aluminium verwendet werden, wobei Kunststoff wegen seiner vergleichsweise niedrigen Schmelztemperatur bevorzugt wird. Das Verfahren kann vorsehen, dass in einem Verfahrensschritt sowohl die Halterung als auch die Gleitschuhe an die Schaltgabel angegossen oder angespritzt werden.

Zur Ausbildung einer Ausnehmung in der Halterung für das Sensorbauteil kann in die Fixiervorrichtung ein Gusskern eingelegt werden. Dieser Gusskern wird nach dem Gussverfahren entfernt. In die entstandene Ausnehmung kann das Sensorbauteil eingesetzt werden. Die Ausmaße der Ausnehmung können dabei den Ausmaßen des Sensorbauteils entsprechen, wodurch die Lage des Sensorbauteils durch die Ausnehmung eindeutig festgelegt wird.

Das Sensorbauteil kann mit der Halterung verklebt werden. Somit ist das Sensorbauteil fest mit der Halterung verbunden und kann sich nicht durch Vibration oder Schwingungen in dem Schaltgetriebe von der Halterung lösen. Eine andere vorteilhafte Möglichkeit der Befestigung des Sensorbauteils an der Halterung besteht darin, das Sensorbauteil in die Halterung einzuclipsen. Die Befestigung erfolgt dabei durch eine Rastverbindung mit entsprechend korrespondierenden Rastelementen.

Das Sensorbauteil kann bei der Herstellung der Halterung eingegossen werden, so dass schon durch den Gießvorgang und das anschließende Aushärten eine feste Verbindung zwischen Sensorbauteil und Halterung entsteht. Um einen guten Schutz gegen Verunreinigungen, Öl oder dergleichen zu erhalten, kann das Sensorbauteil vorzugsweise nahezu vollständig oder vollständig eingegossen werden.

Um das Sensorbauteil beim Gießen in Position zu halten, können Halteelemente, wie beispielsweise Stifte oder dergleichen, verwendet werden. Sie stellen sicher, dass die auf das Sensorbauteil wirkenden Kräfte beim Gießen nicht zu einem Wegschwemmen des Sensorbauteils führen. So können Toleranzen reduziert werden. Sinngemäß gilt dies auch für die Fixierung des oben angesprochenen Gusskerns. Ggf. bleiben nach dem Gießen die durch Halteelemente hervorgerufene Aussparungen im Guss zurück.

Als Sensorbauteil kann bei dem erfindungsgemäßen Verfahren eine Magnetplatte verwendet werden, die in geeigneter Weise mit der Halterung verbunden wird. Dabei umfasst der Begriff "Magnetplatte" auch Trägerplatten mit mindestens einem darauf befindlichen Magneten. Vereinfachend wird nachfolgend i.d.R. von Magnetplatten gesprochen.

Die Magnetplatte führt je nach Lage zu der feststehenden Sensoreinrichtung zu einer Magnetfeldänderung, die entsprechend ausgewertet werden kann und die als Grundlage für die Positionsbestimmung der Schaltgabel dient. Die Sensoreinrichtung kann sich dabei dem Hall-Effekt bedienen und/oder ein PLCD-Sensor (Permanent Magnet Linear Displacement) sein.

Vorzugsweise erfolgt bei dem erfindungsgemäßen Verfahren eine Magnetisierung der Magnetplatte (der Magnete) nach dem Verbinden von Halterung und Magnetplatte. Wird beispielsweise die Magnetplatte umgossen, kann sie durch das Gussmaterial hohen Temperaturen ausgesetzt sein, die ein Magnetisieren der Magnetplatte vor dem Gießen nutzlos machen.

Sinnvollerweise wird eine Magnetisierung der Magnetplatte vor dem Verbinden mit einer (ferromagnetischen) Schaltgabel erfolgen, um eine Magnetisierung der Schaltgabel auszuschließen. Eine magnetisierte Schaltgabel könnte Störfelder hervorrufen. Bei Verwendung gleicher Halterungen und gleicher Sensorbauteile an unterschiedlichen Schaltgabeln können identische Magnetisierungseinrichtungen verwendet werden.

Ein vorgefertigter Sensorarm kann als Verbindungselement zwischen Schaltgabel und Sensorbauteil in die Fixiervorrichtung eingelegt werden. Dieser Sensorarm kann einstückig mit der Halterung für das Sensorbauteil ausgeformt sein. Beim erfindungsgemäßen Verfahren wird bei dieser Ausführung der Sensorarm in der Fixiervorrichtung mit der Schaltgabel verbunden, wobei die Fixiervorrichtung für eine genaue relative Positionierung des Sensorarms sorgt.

Durch ein geeignetes Wärmeeintragungsverfahren wie beispielsweise das Ultraschallschweißen können Halterung und Schaltgabel bzw. Sensorarm und Schaltgabel miteinander verbunden werden. Dabei wird in die zu bildende Kontaktzone zwischen Halterung und Schaltgabel (Sensorarm und Schaltgabel) Wärme eingebracht, so dass sich zumindest ein Werkstoff in der Kontaktzone erweicht und durch eine Formänderung des erweichten Werkstoffes eine formschlüssige Verbindung entsteht. Damit das Sensorbauteil durch das Wärmeeintragungsverfahren oder beim Vergießen eines geeigneten Werkstoffes nicht zu großer Wärme ausgesetzt ist, kann es durch ein Wärmeschild oder dergleichen geschützt werden.

Alternativ zu dem Verfahren, allein durch Wärmeeintrag eine formschlüssige Verbindung herzustellen, kann durch mechanische Krafteinwirkung, beispielsweise durch einen Stempel, ein Formschluss zwischen den zu verbindenden Bauteilen entstehen. Auch hier kann Wärme zugeführt werden, um eine plastische Verformung durch die mechanische Krafteinwirkung zu begünstigen.

Beispielsweise kann die Verbindung eine Steckverbindung einen Zapfen und eine zapfenförmige Tasche umfassen. Die durch die Steckverbindung verbundenen Bauteile werden in die Fixiervorrichtung gelegt, wobei die Fixiervorrichtung die genaue relative Lage der zu verbindenden Teile vorgibt. Ein Spalt zwischen Zapfen und zapfenförmiger Tasche wird mit einem aushärtbaren Material ausgefüllt, wobei das Aushärten des Materials zu einer spielfreien Verbindung zwischen Zapfen und zapfenförmiger Tasche führt. Somit umfasst die Verbindung einen Stopfen aus aushärtbarem Material, der Zapfen und zapfenförmige Tasche fest miteinander und in der richtigen Lage zueinander verbindet.

Der Zapfen und/oder die Tasche können in Einsteckrichtung wenigstens eine Hinterschneidung aufweisen, durch die ein Formschluss zwischen Zapfen und Stopfen und/oder ein Formschluss zwischen Stopfen und Tasche entsteht, wenn das aushärtbare Material des Stopfens aushärtet. Durch diese Hinterschneidungen ist ein Lösen der Verbindung von Zapfen und Tasche in Einsteckrichtung ohne weiteres nicht möglich.

Anhand von Ausführungsbeispielen einer Schaltgabel, die durch das erfindungsgemäße Verfahren hergestellt werden kann, soll die Erfindung näher beschrieben werden. Es zeigen:
- Figur 1: eine Schaltgabel mit Sensorarm in der Draufsicht;
- Figur 2: die Schaltgabel der Figur 1 in der Seitenansicht;
- Figur 3: schematisch eine Verbindung zwischen Halterung und Sensorarm; und
- Figur 4: eine Verbindung zwischen Sensorbauteil und Sensorarm.

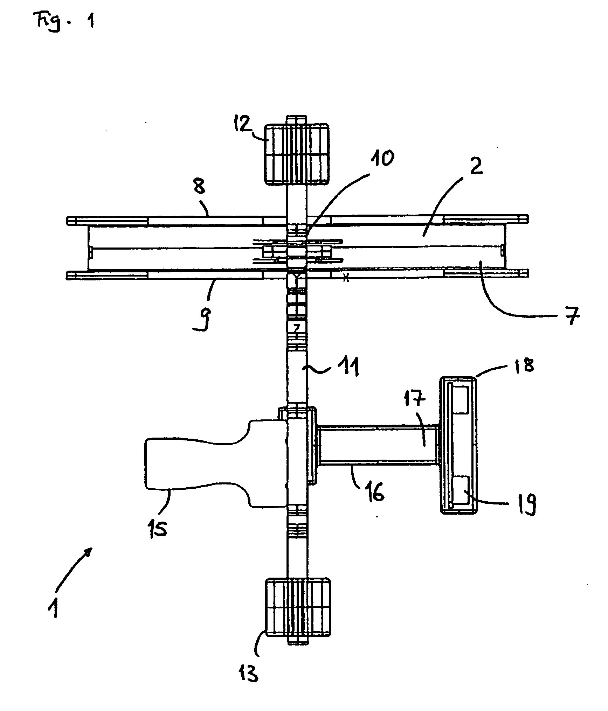

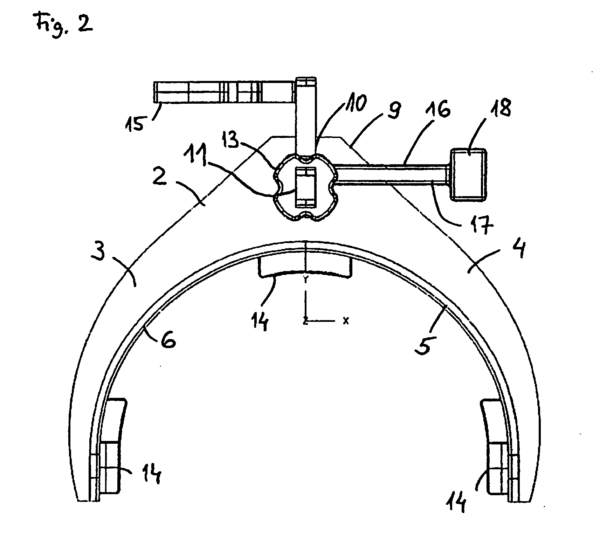

Die Figuren 1 und 2 zeigen eine Schaltgabel 1, die in ihrer Gesamtheit mit 1 bezeichnet wird. Die Schaltgabel 1 umfasst einen Gabelgrundkörper 2 mit einem ersten Gabelschenkel 3 und einem zweiten Gabelschenkel 4, die einen Halbring 5 mit einer halbzylindrischen Innenseite 6 und einer halbzylindrischen Außenseite 7 bilden. An den Halbring 5 angeformt sind zwei zueinander axial beabstandete Stirnwände 8, 9, die sich jeweils von dem Halbring 5 im rechten Winkel radial nach außen erstrecken. Die Stirnwände 8, 9 weisen jeweils eine schlitzartige Aufnahme 10 für eine Schaltstange 11 auf, die durch zwei Lager 12, 13 verschiebbar in einem hier nicht dargestellten Schaltgetriebe gelagert werden kann.

Am Halbring 5 sind jeweils um 90° versetzt drei Gleitschuhe 14 angeformt. Dies können Kunststoffgleitschuhe sein, die an den Schaltgabelgrundkörper 2 angespritzt sind.

An der Schaltstange 11 ist ein Mitnehmer 15 befestigt, der eine in axiale Richtung der Schaltstange 11 gerichtete Bewegung eines hier nicht dargestellten Aktuators auf die Schaltstange 11 überträgt. Des weiteren ist an der Schaltstange 11 ein Sensorarm 16 befestigt, der an einem der Schaltstange 11 abgewandten Ende 17 mit einer Halterung 18 für ein Sensorbauteil 19 verbunden ist, das als Magnetplatte ausgebildet ist.

Durch das erfindungsgemäße Verfahren wird sichergestellt, dass die Position des Sensorbauteils 19 bzw. der Magnetplatte 19 gezogen auf ausgewählte Bezugspunkte der Schaltgabel 1 genau festgelegt ist. Als ausgewählte Bezugspunkte kommen hier insbesondere die Lager 12, 13 sowie die Gleitschuhe 14 in Betracht. Die Lager 12, 13 bestimmen die Position der Schaltgabel 1 in einem Gehäuse des Schaltgetriebes, an dem eine Sensoreinrichtung ortsfest angebracht ist, die mit der Magnetplatte 19 zusammenwirkt. Die Gleitschuhe 14 greifen, wenn die Schaltgabel 1 in das Schaltgetriebe eingebaut ist, in eine Umfangsnut einer Schaltmuffe, die zum Ein- oder Auslegen eines Ganges des Schaltgetriebes in axialer Richtung der Schaltstange 11 verschoben werden muss. Da durch das erfindungsgemäße Verfahren die Position der Magnetplatte 19 zu den Lagern 12, 13 bzw. zu den Gleitschuhen 14 determiniert wird, werden mögliche Toleranzabweichungen der einzelnen Bauteile der Schaltgabel 1 ausgeglichen bzw. eliminiert.

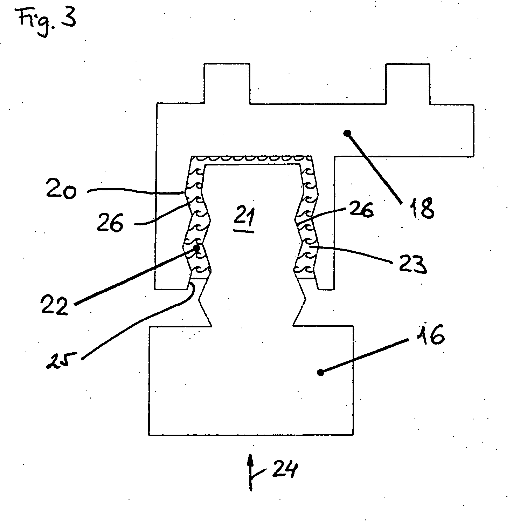

Figur 3 zeigt schematisch eine Verbindung zwischen dem Sensorarm 16 und der Halterung 18, in die die Magnetplatte 19 (durch Halterung 18 verdeckt) eingegossen ist. Die Halterung 18 umfasst eine zylindrische Tasche 20, in die ein Zapfen 21 des Sensorarms 16 hineinragt. Ein Zwischenraum 22 zwischen dem Zapfen 21 und der Tasche 20 ist durch ein aushärtbares Material 23 ausgefüllt, das im ausgehärteten Zustand für eine spielfreie Verbindung zwischen Halterung 18 und Sensorarm 16 sorgt.

Zum Herstellen der Verbindung zwischen Sensorarm 16 und Halterung 18 wird der Zapfen 21 in Richtung 24 in die Tasche 20 geführt. Vorzugsweise ist vor dem Einführen des Zapfens 21 die Tasche 20 mit dem noch nicht ausgehärteten und daher weichen Material 23 gefüllt, so dass das Material 23 durch den Zapfen 21 teilweise verdrängt wird. Durch eine Fixiervorrichtung (nicht dargestellt) werden Sensorarm 16 und Halterung 18 zueinander genau in Position gehalten. In dieser gehaltenen Position härtet das aushärtbare Material aus, so dass eine feste Verbindung zwischen den beiden Bauteilen 16, 18 mit der gewünschten Lage zueinander entsteht.

Wie zu erkennen ist, weist der Zapfen 21 und die Tasche 20 an einer Innenseite 25 in Einsteckrichtung 24 gesehen eine Profilierung auf, wodurch Hinterschneidungen 26 ausgebildet sind, durch die ein Formschluss zwischen Zapfen 21 und Tasche 20 entsteht, wenn das aushärtbare Material 23 fest geworden ist. Dadurch wird verhindert, dass sich die Verbindung zwischen Sensorarm 16 und Halterung 18 lösen kann.

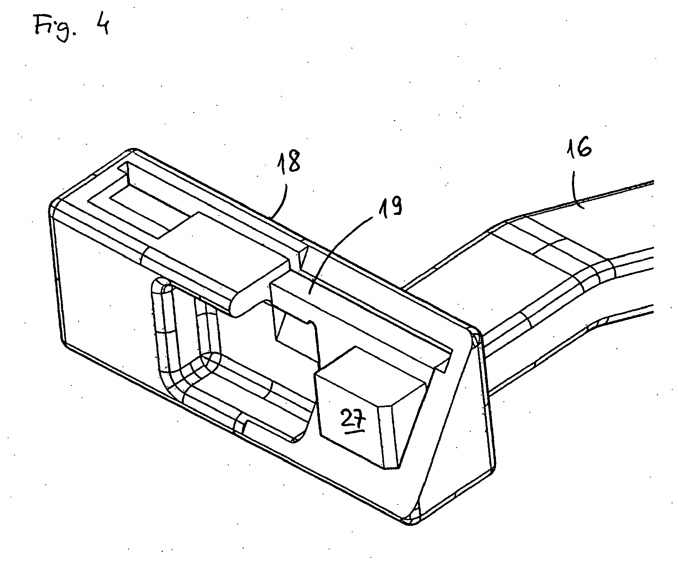

Figur 4 zeigt den Schaltarm 16 in einer weiteren Ausführung. Der Schaltarm 16 ist mit der hier in Quaderform ausgebildeten Halterung 18 fest verbunden. Ein Teil der Halterung 18 ist der Übersicht halber in der Figur 4 weggeschnitten. Zu erkennen ist die Magnetplatte 19 mit einem durch den Schnitt freigelegten Magneten 27. Die Magnetplatte 19 umfasst einen weiteren Magneten, der in der Darstellung der Figur 4 jedoch durch das Material der Halterung 18 vollständig umschlossen ist.

### Bezugszeichenliste

- 1: Schaltgabel
- 2: Schaltgabelgrundkörper
- 3: erster Gabelschenkel
- 4: zweiter Gabelschenkel
- 5: Halbring
- 6: Innenseite
- 7: Außenseite
- 8: erste Stirnwand
- 9: zweite Stirnwand
- 10: Aufnahme
- 11: Schaltstange
- 12: erstes Lager
- 13: zweites Lager
- 14: Gleitschuh
- 15: Mitnehmer
- 16: Sensorarm
- 17: Ende
- 18: Halterung
- 19: Sensorbauteil
- 20: Tasche
- 21: Zapfen
- 22: Spalt
- 23: aushärtbares Material
- 24: Einsteckrichtung
- 25: Innenseite
- 26: Hinterschneidung
- 27: Magnet

## Patentansprüche

1. Verfahren zum Anbringen eines Sensorbauteils (19) an eine Schaltgabel (1) für ein Schaltgetriebe, wobei die Schaltgabel (1) einen Gabelgrundkörper (2), wenigstens ein Lager (12,13) zur Lagerung der Schaltgabel (1), eine Schaltstange (11), die das wenigstens eine Lager (12,13) mit dem Gabelgrundkörper (2) verbindet, sowie an den Gabelgrundkörper (2) angebrachte Gleitschuhe (14) umfasst, **gekennzeichnet durch** folgende Verfahrensschritte:
a) Einlegen und Ausrichten der Schaltgabel (1) in einer Fixiervorrichtung, wobei die Ausrichtung anhand wenigstens eines ausgewählten Bezugspunktes an der Schaltgabel (1) erfolgt, wobei als Bezugspunkt die Gleitschuhe (14) und/oder das wenigstens eine Lager (12,13) ausgewählt werden;
b) Herstellen einer Verbindung zwischen einer Halterung (18) für das Sensorbauteil (19) und der Schaltgabel (1), wobei beim Herstellen der Verbindung die relative Lage der Halterung (18) bezogen auf den wenigstens einen Bezugspunkt der Schaltgabel (1) **durch** die Fixiervorrichtung vorgegeben wird, wobei eine mit Spiel versehene Verbindung zwischen Halterung (18) und Schaltgabel (1) in der Fixiervorrichtung in eine spielfreie Verbindung umgewandelt wird; und
c) Verbinden der Halterung (18) mit dem Sensorbauteil (19).

2. Verfahren nach Anspruch 1, **dadurch gekennzeichnet, dass** in der Fixiervorrichtung das Verbinden der Halterung (18) mit dem Sensorbauteil (19) erfolgt.

3. Verfahren nach Anspruch 1 oder 2, **dadurch gekennzeichnet, dass** durch eine aushärtbare Masse die Verbindung zwischen Halterung (18) für das Sensorbauteil (19) und der Schaltgabel (1) hergestellt wird, wobei die Masse in der Fixiervorrichtung zumindest teilweise aushärtet.

4. Verfahren nach Anspruch 3, **dadurch gekennzeichnet, dass** die aushärtbare Masse eine Gussmasse ist, wobei die Halterung (18) für das Sensorbauteil (19) durch ein Gussverfahren in der Fixiervorrichtung entsteht.

5. Verfahren nach Anspruch 4, **dadurch gekennzeichnet, dass** in die Fixiervorrichtung ein Gusskern zur Ausbildung einer Ausnehmung in der Halterung (18) für das Sensorbauteil eingelegt wird.

6. Verfahren nach einem der Ansprüche 1 bis 5, **dadurch gekennzeichnet, dass** das Sensorbauteil (19) mit der Halterung (18) verklebt wird.

7. Verfahren nach einem der Ansprüche 1 bis 5, **dadurch gekennzeichnet, dass** das Sensorbauteil (19) in die Halterung (18) eingeclipst wird.

8. Verfahren nach einem Anspruch 4, **dadurch gekennzeichnet, dass** das Sensorbauteil (19) eingegossen wird, vorzugsweise vollständig eingegossen wird.

9. Verfahren nach Anspruch 8, **dadurch gekennzeichnet, dass** Halteelemente das Sensorbauteil (19) in Position halten, wenn das Sensorbauteil (19) eingegossen wird.

10. Verfahren nach einem der Ansprüche 1 bis 9, **dadurch gekennzeichnet, dass** das Sensorbauteil eine Magnetplatte (19) ist und dass eine Magnetisierung der Magnetplatte (19) nach dem Verbinden von Halterung (18) und Magnetplatte (19) erfolgt.

11. Verfahren nach einem der Ansprüche 1 bis 10, **dadurch gekennzeichnet, dass** in der Fixiervorrichtung ein vorgefertigter Sensorarm (16) als Verbindungselement zwischen Schaltgabel (1) und Sensorbauteil (19) eingelegt wird.

12. Verfahren nach einem der Ansprüche 1 bis 11, **dadurch gekennzeichnet, dass** durch ein geeignetes Wärmeeintragungsverfahren Halterung (18) und Schaltgabel (1) miteinander verbunden werden.

13. Verfahren nach einem der Ansprüche 1 bis 12, **dadurch gekennzeichnet, dass** durch wenigstens ein Wärmeschild das Sensorbauteil (19) vor einem Wärmeeintrag geschützt wird.

14. Verfahren nach einem der Ansprüche 1 bis 13, **dadurch gekennzeichnet, dass** die Verbindung als Steckverbindung ausgebildet ist und einen Zapfen (21) und eine zapfenförmige Tasche (20) umfasst, die spielfrei miteinander verbunden werden.

15. Verfahren nach einem der Ansprüche 1 bis 14, **dadurch gekennzeichnet, dass** die Verbindung als Steckverbindung ausgebildet ist und einen Stopfen aus aushärtbaren Material (23) umfasst, der durch Aushärten das Spiel der Steckverbindung zu null setzt.

16. Verfahren nach Anspruch 15, **dadurch gekennzeichnet, dass** der Zapfen (21) und/oder die Tasche (20) in Einsteckrichtung (24) wenigstens eine Hinterschneidung (26) aufweisen, durch die ein Formschluss zwischen Zapfen (21) und Stopfen und/oder ein Formschluss zwischen Stopfen und Tasche (20) entsteht, wenn das aushärtbare Material (23) des Stopfens aushärtet.

## Claims

1. Method for fitting a sensor component (19) onto a shift fork (1) for a manual gearbox, wherein the shift fork (1) comprises a basic fork body (2), at least one bearing (12, 13) for the mounting of the shift fork (1), a shift rod (11) which connects the at least one bearing (12, 13) to the basic fork body (2) and sliding shoes (14) fitted onto the basic fork body (2), **characterized by** the following method steps:
a) inserting and aligning the shift fork (1) in a fixing device, wherein the alignment is undertaken with reference to at least one selected reference point on the shift fork (1), wherein the sliding shoes (14) and/or the at least one bearing (12, 13) are/is selected as the reference point;
b) producing a connection between a holder (18) for the sensor component (19) and the shift fork (1), wherein, during the production of the connection, the relative position of the holder (18) with respect to the at least one reference point of the shift fork (1) is predetermined by the fixing device, and wherein a connection, which is provided with play, between the holder (18) and the shift fork (1) in the fixing device is converted into a play-free connection; and
c) connecting the holder (18) to the sensor component (19).

2. Method according to Claim 1, **characterized in that** the holder (18) is connected to the sensor component (19) in the fixing device.

3. Method according to Claim 1 or 2, **characterized in that** the connection between the holder (18) for the sensor component (19) and the shift fork (1) is produced by a curable compound, wherein the compound at least partially cures in the fixing device.

4. Method according to Claim 3, **characterized in that** the curable compound is a casting compound, wherein the holder (18) of the sensor component (19) is produced in the fixing device by a casting process.

5. Method according to Claim 4, **characterized in that** a casting core for forming a recess in the holder (18) for the sensor component is placed into the fixing device.

6. Method according to one of Claims 1 to 5, **characterized in that** the sensor component (19) is adhesively bonded to the holder (18).

7. Method according to one of Claims 1 to 5, **characterized in that** the sensor component (19) is clipped into the holder (18).

8. Method according to Claim 4, **characterized in that** the sensor component (19) is encapsulated, and is preferably completely encapsulated.

9. Method according to Claim 8, **characterized in that** holding elements hold the sensor component (19) in position if the sensor component (19) is encapsulated.

10. Method according to one of Claims 1 to 9, **characterized in that** the sensor component is a magnetic plate (19), and **in that** the magnetic plate (19) is magnetized after the connection of holder (18) and magnetic plate (19).

11. Method according to one of Claims 1 to 10, **characterized in that** a premanufactured sensor arm (16) is placed in the fixing device as a connecting element between shift fork (1) and sensor component (19).

12. Method according to one of Claims 1 to 11, **characterized in that** holder (18) and shift fork (1) are connected to each other by a suitable heat application process.

13. Method according to one of Claims 1 to 12, **characterized in that** the sensor component (19) is protected by at least one heat sheet from an application of heat.

14. Method according to one of Claims 1 to 13, **characterized in that** the connection is designed as a plug-in connection and comprises a pin (21) and a pinshaped pocket (20), which are connected to each other in a play-free manner.

15. Method according to one of Claims 1 to 14, **characterized in that** the connection is designed as a plug-in connection and comprises a stopper made of curable material (23) which, by means of curing, eliminates the play in the plug-in connection.

16. Method according to Claim 15, **characterized in that** the pin (21) and/or the pocket (20) have/has at least one undercut (26) in the plug-in direction (24), said undercut being used to produce an interlocking connection between pin (21) and stopper and/or an interlocking connection between stopper and pocket (20) when the curable material (23) of the stopper cures.

## Revendications

1. Procédé pour fixer un composant de capteur (19) sur une fourchette de changement de vitesse (1) d'une boîte de vitesses, la fourchette de changement de vitesse (1) comprenant un corps de base de fourchette (2), au moins un palier (12, 13) pour le support sur palier de la fourchette de changement de vitesse (1), une tige de changement de vitesse (11) qui relie l'au moins un palier (12, 13) au corps de base de fourchette (2), ainsi que des patins (14) fixés sur le corps de base de fourchette (2),
**caractérisé par** les étapes de procédé suivantes :
a) enclenchement et orientation de la fourchette de changement de vitesse (1) dans un dispositif de fixation, l'orientation s'effectuant à l'aide d'au moins un point de référence sélectionné sur la fourchette de changement de vitesse (1), les patins (14) et/ou l'au moins un palier (12, 13) étant sélectionnés en tant que point de référence ;
b) établissement d'une liaison entre une fixation (18) pour le composant de capteur (19) et la fourchette de changement de vitesse (1), la position relative de la fixation (18) par rapport à l'au moins un point de référence de la fourchette de changement de vitesse (1) étant prédéfinie par le dispositif de fixation lors de l'établissement de la liaison, une liaison pourvue d'un jeu entre la fixation (18) et la fourchette de changement de vitesse (1) dans le dispositif de fixation étant convertie en une liaison sans jeu ; et
c) connexion de la fixation (18) au composant de capteur (19).

2. Procédé selon la revendication 1, **caractérisé en ce que** la connexion de la fixation (18) au composant de capteur (19) a lieu dans le dispositif de fixation.

3. Procédé selon la revendication 1 ou 2, **caractérisé en ce que** la liaison entre la fixation (18) pour le composant de capteur (19) et la fourchette de changement de vitesse (1) est établie par une composition durcissable, la composition durcissant au moins en partie dans le dispositif de fixation.

4. Procédé selon la revendication 3, **caractérisé en ce que** la composition durcissable est une composition de coulage, la fixation (18) pour le composant de capteur (19) se produisant dans le dispositif de fixation par un procédé de coulage.

5. Procédé selon la revendication 4, **caractérisé en ce qu'**un noyau de coulée est introduit dans le dispositif de fixation pour créer un évidement dans la fixation (18) pour le composant de capteur.

6. Procédé selon l'une quelconque des revendications 1 à 5, **caractérisé en ce que** le composant de capteur (19) est collé à la fixation (18).

7. Procédé selon l'une quelconque des revendications 1 à 5, **caractérisé en ce que** le composant de capteur (19) est enclipsé dans la fixation (18).

8. Procédé selon la revendication 4, **caractérisé en ce que** le composant de capteur (19) est coulé, de préférence complètement incorporé par coulage.

9. Procédé selon la revendication 8, **caractérisé en ce que** des éléments de retenue maintiennent le composant de capteur (19) en position lorsque le composant de capteur (19) est coulé.

10. Procédé selon l'une quelconque des revendications 1 à 9, **caractérisé en ce que** le composant de capteur est une plaque magnétique (19) et **en ce qu'**une aimantation de la plaque magnétique (19) a lieu après la connexion de la fixation (18) et de la plaque magnétique (19).

11. Procédé selon l'une quelconque des revendications 1 à 10, **caractérisé en ce qu'**un bras de capteur (16) préfabriqué est introduit dans le dispositif de fixation en tant qu'élément de liaison entre la fourchette de changement de vitesse (1) et le composant de capteur (19).

12. Procédé selon l'une quelconque des revendications 1 à 11, **caractérisé en ce que** la fixation (18) et la fourchette de changement de vitesse (1) sont connectées l'une à l'autre par un procédé approprié d'apport de chaleur.

13. Procédé selon l'une quelconque des revendications 1 à 12, **caractérisé en ce que** le composant de capteur (19) est protégé par au moins un écran thermique contre un apport de chaleur.

14. Procédé selon l'une quelconque des revendications 1 à 13, **caractérisé en ce que** la liaison est réalisée sous forme de connexion par enfichage, et comprend un tourillon (21) et une cavité (20) en forme de tourillon, lesquels sont connectés ensemble sans jeu.

15. Procédé selon l'une quelconque des revendications 1 à 14, **caractérisé en ce que** la liaison est réalisée sous forme de connexion par enfichage et comprend un bouchon en matériau durcissable (23) qui réduit le jeu de la connexion par enfichage à zéro sous l'effet du durcissement.

16. Procédé selon la revendication 15, **caractérisé en ce que** le tourillon (21) et/ou la cavité (20) présentent, dans la direction d'enfichage (24), au moins une contre-dépouille (26), par le biais de laquelle un engagement positif entre le tourillon (21) et le bouchon et/ou un engagement positif entre le bouchon et la cavité (20) se produit, lorsque le matériau durcissable (23) du bouchon durcit.
